(19) Europäisches Patentamt / European Patent Office / Office européen des brevets

(11) **EP 1 849 832 A1**

(12) **EUROPEAN PATENT APPLICATION**
published in accordance with Art. 158(3) EPC

(43) Date of publication:
   **31.10.2007 Bulletin 2007/44**

(51) Int Cl.:
   *C08L 65/00* (2006.01)  *C08K 7/02* (2006.01)
   *C08K 3/26* (2006.01)  *B29C 39/02* (2006.01)
   *B29K 23/00* (2006.01)  *B29K 105/16* (2006.01)

(21) Application number: 06713866.9

(22) Date of filing: **16.02.2006**

(86) International application number:
   **PCT/JP2006/302725**

(87) International publication number:
   **WO 2006/088087 (24.08.2006 Gazette 2006/34)**

(84) Designated Contracting States:
   **AT BE BG CH CY CZ DE DK EE ES FI FR GB GR
   HU IE IS IT LI LT LU LV MC NL PL PT RO SE SI
   SK TR**

(30) Priority: **18.02.2005  JP 2005042395
   20.10.2005  JP 2005306394**

(71) Applicant: **Rimtec Corporation
   Tokyo 1008246 (JP)**

(72) Inventors:
   • **MIURA, Takahiro
     hiyoda-ku, Tokyo, 1008246 (JP)**
   • **TAKIMOTO, Tomohiko
     hiyoda-ku, Tokyo, 1008246 (JP)**

(74) Representative: **Albrecht, Thomas
   Kraus & Weisert
   Thomas-Wimmer-Ring 15
   80539 München (DE)**

(54) **NORBORNENE RESIN MOLDED BODY AND METHOD FOR MANUFACTURING SAME**

(57)    A norbornene-based resin molded article obtained by injecting a reaction solution comprising a norbornene-based monomer, a metathesis catalyst, a fibrous filler having an aspect ratio of 5 to 100, and a particulate filler having an aspect ratio of 1 to 2 in a mold, and bulk polymerizing in the mold. According to the present invention, a norbornene-based resin molded article superior in rigidity and dimensional stability is provided.

EP 1 849 832 A1

**Description**

TECHNICAL FIELD

The present invention relates to a norbornene-based resin molded article including specific filler and the method of production thereof. The present invention also relates to a reaction liquid preferably used in the method of production.

BACKGROUND ART

It has been put to practical use to produce a molded article made of a norbornene-based resin by the reaction injection molding (RIM) method comprising injecting a reaction solution including norbornene-based monomers and metathesis catalysts into a mold and to bulk polymerizing thereof via ring opening. The reaction solution is usually obtained by instantaneously mixing two or more reaction liquids in a collisional mixer, etc. Each of the reaction liquids is not able to bulk polymerize alone, but when mixing all of them to produce a reaction solution containing a predetermined ratio of each component, a norbornene-based monomer is bulk polymerized.

It is known to form a molded article by adding various types of fillers to the reaction solution for the purpose to provide rigidity and dimensional stability (i.e. hard to expand and shrink due to temperature change, and little anisotropic in expansion and shrinkage) in a molded article obtained by the RIM method. However, in the conventional methods, the molded article may be insufficient in rigidity, and have anisotropy in rigidity (i.e. rigidity of the obtained molded article is varied in each direction). Also, dimensional stability may be poor. Further, the fillers are used as an additive to reaction liquids, but the reaction liquids are liable to have low storing stability.

For example, it is suggested using glass fiber, wollastonite, etc. as fillers (Patent Articles 1 and 2). When using these fibrous fillers, however, the obtained molded articles may have anisotropy in rigidity. There is another problem that the injection nozzle is clogged at the time of injection into the mold if a large amount of fillers is added to the reaction solution.

Also, it is suggested using fillers with specific particle sizes such as calcium carbonate (Patent Article 3). However, improvement effects on rigidity are insufficient in this method.

Further, in any of above cases, there are problems that pipe is clogged due to precipitation of fillers in the reaction liquids, and that obtained molded articles are not uniform.

[Patent Article 1] The Japanese Unexamined Patent Publication 58-129013
[Patent Article 2] The Japanese Unexamined Patent Publication 2-185558
[Patent Article 3] The Japanese Unexamined Patent Publication 2003-321597

DISCLOSURE OF INVENTION

PROBLEM TO BE SOLVED BY THE INVENTION

An obj ect of the present invention is to provide a resin molded article having high rigidity, small anisotropy in rigidity and superior dimensional stability, and the method of production thereof. The other object of the present invention is to provide a reaction liquid, superior in storing stability and suitable to use in the method of production.

MEANS FOR SOLVING THE PROBLEM

The present inventors found that the above problems can be solved by using a fibrous filler and a particulate filler having an aspect ratio in the specific ranges together as a result of earnest investigations, and completed the present invention based on the findings.

Thus, according to the first aspect of the present invention, there is provided a norbornene-based resin molded article, obtained by bulk polymerization of a norbornene-based monomer in a mold and comprising a fibrous filler having an aspect ratio of 5 to 100, and a particulate filler having an aspect ratio of 1 to 2. The fibrous filler is preferably wollastonite, and the particulate filler is preferably calcium carbonate.

Also preferably, the weight ratio of the fibrous filler and particulate filler, "fibrous filler: particulate filler", is 95:5 to 55:45. Preferably, the total amount of the fibrous filler and particulate filler is 5 to 60wt% per 100wt% of the whole norbornene-based resin molded article.

The norbornene-based resin molded article may be a complex molded article co-formed with a complex member.

Note that a weight ratio of the fibrous filler and particulate filler and the total amount of the fibrous filler and particulate filler indicate a weight ratio and an amount in a norbornene-based resin part excluding the complex member when a molded article of the present invention is a complex molded article.

According to the second aspect of the present invention, there is provided a method of production of the norbornene-based resin molded article, comprising injecting a reaction solution including the norbornene-based monomer, a metathesis catalyst, the fibrous filler and the particulate filler into a mold, and conducting bulk polymerization in the mold.

Preferably, the reaction solution is produced by mixing a reaction liquid, at least including the norbornene-based monomer, the fibrous filler and the particulate filler, with other reaction liquids.

A complex member may be placed in the mold.

According to the third aspect of the present invention, there is provided a reaction liquid used in the method of production of the norbornene-based resin molded article and including the norbornene-based monomer, the fibrous filler and the particulate filler (hereinafter a reaction liquid of the present invention having such constitutions are referred to as "reaction liquid ($\alpha$)").

It is preferable that a total amount of the fibrous filler and particulate filler is 20 to 80wt% per 100wt% of the whole reaction liquid ($\alpha$).

EFFECTS OF THE INVENTION

Since a norbornene-based resin molded article of the present invention has high rigidity, small anisotropy in rigidity, and excellent dimensional stability, it can be preferably used in various types and wide range of applications such as housing equipments, general architectural parts, electric parts, and car parts. Also, since in the reaction liquid ($\alpha$) of the present invention, the precipitation of the fillers is suppressed, no clogging in a pipe, etc. arises, and a uniform molded article can be obtained when using for reaction injection molding.

BEST MODE FOR WORKING THE INVENTION

A norbornene-based resin molded article of the present invention (hereinafter may referred simply as a "molded article") is obtained by bulk polymerization of a norbornene-based monomer in a mold, and includes a fibrous filler and a particulate filler.

The above molded article of the present invention can be produced by a method of production of the present invention. In the method of production of the present invention, a reaction solution comprising a norbornene-based monomer, a metathesis catalyst, a fibrous filler and a particulate filler is injected in a mold, and bulk polymerized in the mold.

Reaction Solution

A reaction solution used in the method of production of present invention is obtained by mixing usually two or more reaction liquids wherein a norbornene-based monomer, a metathesis catalyst, a fibrous filler, a particulate filler and other optional components are divided to be included. Each of the reaction liquids is not able to start a bulk polymerization alone, but when mixing all of them to produce the reaction solution containing a predetermined ratio of each component, a norbornene-based monomer is bulk polymerized.

As the optional components, an activator, an activity regulator, an elastomer, and an antioxidizing agent, etc. may be mentioned.

First, each component included in the reaction solution will be explained.

Norbornene-based Monomer

The norbornene-based monomer used in the present invention is a compound having norbornene ring structure, and may be any one of these. Among these, it is preferable to use a polycyclic norbornene-based monomer having three or more rings so that a molded article superior in heat resistance can be obtained.

As a specific example of the norbornene-based monomer, norbornene, norbornadien and other bicyclic compounds; dicyclopentadiene (a dimer of cyclopentadiene), dihydrodicyclopentadiene, and other tricyclic compounds; tetracyclododecene and other tetracyclic compounds; a trimer of cyclopentadiene and other pentacyclic compounds; a tetramer of cyclopentadiene and other heptacyclic compounds; substitution compounds of those mentioned above such as a methyl, ethyl, propyl, butyl and other alkyl substitution compounds, a vinyl and other alkenyl substitution compounds, an ethylidene and other alkylidene substitution compounds, and phenyl, tolyl, naphthyl and other aryl substitution compounds; as well as substitution compound of those mentioned above having polar groups such as ester, ether and cyano groups, and halogen atoms; may be illustrated. Two or more of these monomers may be used in combination. Tricyclic, tetracyclic, or pentacyclic monomers are preferable from the viewpoints of availability and high reactivity as well as excellent heat resistance in the resulting molded articles. Dicyclopentadiene is particularly preferable.

Further, the produced ring-opening polymer is preferably a thermosetting type. For this purpose, among the above mentioned norbornene-based monomers, it is preferable to use one at least including a cross-linkable monomer having two or more reactive double bonds such as a symmetric trimer of cyclopentadiene. The ratio of such a cross-linkable monomer in the whole norbornene-based monomers is preferably 2 to 30wt%.

Note that a monocyclic cycloolefin, etc., co-polymerizable via ring opening with norbornene-based monomers, such as cyclobutene, cyclopentene, cyclopentadiene, cyclooctene and cyclododecene can be used as a comonomer within the scope of the present invention.

Fibrous Filler and Particulate Filler

A fibrous filler used in the present invention is a solid material insoluble in a norbornene-based monomer and has an aspect ratio of 5 to 100. The aspect ratio is preferably 10 to 50 and more preferably 15 to 35. When the aspect ratio is excessively small, rigidity and dimensional stability of a resulting molded article may be insufficient. On the other hand, when it is excessively large, injection nozzle is liable to be clogged on injection in a mold.

Note that the aspect ratio of the filler in the present invention indicates a ratio of an average length of the long axis and 50%-volume cumulative diameter for the filler. The average length of the long axis is a numerical average length of long axis obtained by measuring long axis of 100 fillers randomly selected in an optical microscope picture and calculating the arithmetic mean value. Also, the 50%-volume cumulative diameter is a value obtained by measuring particle size distribution in the X-ray transmission method.

The 50%-volume cumulative diameter of the fibrous filler is preferably 0.1 to 50 $\mu$m and more preferably 1 to 30 $\mu$m. When the 50%-volume cumulative diameter is excessively small, rigidity and dimensional stability of a resulting molded article may be insufficient. On the other hand, when it is excessively large, the filler may precipitate in a tank and a pipe, or injection nozzle may be clogged on injecting the reaction solution in a mold.

As a specific example for the fibrous filler, glass fiber, wollastonite, potassium titanate, zonolite, basic magnesium sulfate, aluminum borate, tetrapod-shaped zinc oxide, plaster fiber, phosphate fiber, alumina fiber, needle-like calcium carbonate, and needle-like boehmite, etc. may be mentioned. Among these, wollastonite is preferable, which is capable to improve rigidity even when using a small amount and is not blocking bulk polymerization.

A particulate filler used in the present invention is a solid material insoluble in a norbornene-based monomer and has an aspect ratio of 1 to 2. The aspect ratio is preferably 1 to 1.5. Also, the 50%-volume cumulative diameter of the particulate filler is preferably 0.1 to 50 $\mu$m, more preferably 1 to 30$\mu$m, and particularly preferably 1 to 10 $\mu$m. When the 50%-volume cumulative diameter is excessively small, rigidity and dimensional stability of a resulting molded article may be insufficient. On the other hand, when it is excessively large, the filler may precipitate in a tank and a pipe, or injection nozzle may be clogged on injecting the reaction solution in a mold.

As a specific example for the particulate filler, calcium carbonate, calcium silicate, calcium sulfate, aluminum hydroxide, magnesium hydroxide, titanium oxide, zinc oxide, barium titanate, silica, alumina, carbon black, graphite, antimony oxide, red phosphorus, various types of metal powder, clay, various types of ferrite, hydrotalcite, etc. may be mentioned. The particulate filler may be a hollow body of the above. Among these, calcium carbonate is preferable since it does not block bulk polymerization.

The surfaces of the fibrous filler and the particulate filler are preferably hydrophobized. Using hydrophobized fillers results in homogenous distribution of the fillers in a resulting molded article, so that not only rigidity and dimensional stability of the molded article can be uniform, but also that anisotropy can be reduced. As an agent for hydrophobization, silane coupling agent, titanate coupling agent, aluminum coupling agent, fatty acid, fat, surfactant, wax, other macromolecules, etc. may be mentioned.

The hydrophobizing method is not particularly limited. For example, it is possible to contain untreated filler and hydrophobizing agent separately in different reaction liquids, and to prepare a reaction solution and hydrophobize at the same time when mixing two or more reaction liquids, but it is preferable to prepare a reaction liquid by using hydrophobized fillers. By using hydrophobized fillers, aggregation of fillers can be prevented, so that the distribution of the fillers in the reaction liquid can be improved to prevent the fillers to precipitate.

The amount of the filler in the reaction solution is the total amounts of the above fibrous filler and particulate filler, and is preferably 5 to 60wt% and more preferably 10 to 50wt%. When the amount of the fillers is excessively large, the fillers may precipitate in a tank and a pipe, and injection nozzle may be clogged while injecting the reaction solution in a mold. On the other hand, when the amount is excessively small, rigidity and dimensional stability of a resulting molded article may be insufficient.

The weight ratio of the fillers in the reaction solution, "fibrous filler: particulate filler", is preferably 95:5 to 55: 45 and more preferably 80:20 to 60:40. When the weight ratio of the fibrous filler and the particulate filler is within the above range, the effect of the present invention becomes more significant.

Metathesis Catalyst

A metathesis catalyst used in the method of production of the present invention is not particularly limited in the reaction injection molding (RIM) method as far as it can polymerize a norbornene-based monomer via ring opening, and it may include those used in the related arts.

As such a metathesis catalyst, a compound of transition metals of Group 5 or Group 6 in the periodic table, etc. may be mentioned.

As a compound of transition metals of Group 5 or Group 6 in the periodic table, for instance, a halide, an oxyhalide, an oxide, an organic ammonium salt, an oxyacid salt and a heteropoly acid salt of these transition metals may be mentioned. Among these, a halide, an oxyhalide and an organic ammonium salt are preferable, and an organic ammonium salt is more preferable. Also, for the transition metal, molybdenum, tungsten and tantalum are preferable, and molybdenum and tungsten are more preferable.

As particularly preferable examples of compounds of transition metals of Group 5 or Group 6 in the periodic table as a metathesis catalyst, molybdic acid salt and tungstic acid salt of tridodecyl ammonium, molybdic acid salt and tungstic acid salt of methyltricaprylic ammonium, molybdic acid salt and tungstic acid salt of tri(tridecyl)ammonium, molybdic acid salt and tungstic acid salt of trioctyl ammonium, etc. may be mentioned.

The amount of these compounds of transition metal of Group 5 or Group 6 in the periodic table used as a metathesis catalyst is usually 0.01 to 50 mmol and more preferably 0.1 to 20 mmol with respect to 1 mol of norbornene-based monomer in the reaction solution.

As a metathesis catalyst, it is also preferable to use a metal carbene complex having a Group 8 metal element in the periodic table as a central metal.

The metal carbene complex having a Group 8 metal atom in the periodic table as a central metal has a structure (M=C) that a metal atom (M) is directly bonded to carbene carbon (>C:) in the complex, by bonding a carbene compound to central metal atom consisting of a Group 8 metal atom in the periodic table. The carbene compound indicates a collective term of compounds having a carbene carbon, i.e. methylene free radical.

As a Group 8 metal atom in the periodic table, ruthenium and osmium are preferable, and ruthenium is particularly preferable.

As a preferable specific example of the metal carbene complex, benzylidene (1,3-dimesityl imidazolidine-2-ylidene)(tricyclohexyl phosphine) ruthenium dichloride, benzylidene (1, 3-dimesityl imidazolidine-2-ylidene)(tricyclohexyl phosphine) ruthenium dichloride, benzylidene (1,3-dimesityl-4,5-dibromoimidazoline-2-ylidene)(tricyclohexyl phosphine) ruthenium dichloride, and bis (tricyclohexyl phosphine) benzylidene ruthenium dichloride, etc. may be mentioned.

The amount of these metal carbene complexes used as a metathesis catalyst is usually 0.001 to 1 mmol and preferably 0.002 to 0.1 mmol with respect to 1 mol of monomer in the reaction solution.

When the amount of the metathesis catalyst is too small, the reaction takes a longer time due to the excessively low polymerization activity, so that the production efficiency is reduced. On the other hand, when the amount is too large, the reaction becomes too severe, bulk polymerization starts before the reaction solution is sufficiently injected in a mold, and it is difficult to store the catalyst homogeneously since it is easily deposited.

The metathesis catalyst can be dissolved or dispersed in a small amount of inactive solvent. As the inactive solvent in such a case, for example, pentane, hexane, heptane and other chain aliphatic hydrocarbon solvents; cyclopentane, cyclohexane, methylcyclohexane, decahydronaphthalene, tricyclodecane, cyclooctane and other alicyclic hydrocarbon solvents; benzene, toluene, xylene and other aromatic hydrocarbon solvents; diethyl ether, tetrahydrofuran and other ether based solvents; may be used. Also, if it does not reduce the catalyst activity, a liquid antioxidant, a plasticizer and an elastomer may be used as the solvent. Among the above solvents, an aromatic hydrocarbon solvent, an aliphatic hydrocarbon solvent and an alicyclic hydrocarbon solvent, widely used in the commercial production, are preferable.

Optional Component

As an activator, ethyl aluminum dichloride, diethyl aluminum chloride and other alkyl aluminum halides; an alkoxyalkyl aluminum halide that a part of alkyl groups in these alkyl aluminum halides is substituted with an alkoxy group; an organic tin compound; may be used. The amount of the activator is not particularly limited, but is usually 0.1 to 100 mol and more preferably 1 to 10 mol with respect to 1 mol of the metathesis catalyst used in the whole reaction solution.

An activity regulator is capable to change reaction rate, time from mixing the reaction solution to starting the reaction, reaction activity, etc.

As an activity regulator when using a compound of a transition metal of Group 5 or Group 6 in the periodic table as a metathesis catalyst, compounds having an effect to reduce the metathesis catalyst, etc. may be mentioned, and alcohols, halo alcohols, esters, ethers, nitriles etc. can be used. Among these, alcohols and halo alcohols are preferable, and halo alcohols are particularly preferable.

As a specific example of the alcohols, n-propanol, n-butanol, n-hexanol, 2-butanol, isobutyl alcohol, isopropyl alcohol, t-butyl alcohol, etc. may be mentioned. As a specific example of the halo alcohols, 1,3-dichloro-2-propanol, 2-chloroethanol, 1-chlorobutanol, etc. may be mentioned.

As an activity regulator when using a metal carbene complex as a metathesis catalyst, Lewis base compounds may be mentioned. As a Lewis base compound, tricyclopentyl phosphine, tricyclohexyl phosphine, triphenylphosphine, triphenyl phosphite, n-butylphosphine and other Lewis base compounds having a phosphorous atom; and n-butylamine, pyridine, 4-vinylpyridine, acetonitrile, ethylene diamine, N-benzylidene methylamine, pyrazine, piperidine, imidazol and other Lewis base compound having a nitrogen atom; may be mentioned. Also, vinylnorbornene, propenylnorbornene, isopropenylnorbornene and other norbornenes substituted by an alkenyl group are not only the above norbornene-based monomer, but also act as an activity regulator. The amount of these activity regulators varies according to the compound used, and is not constant.

As an elastomer, for example, natural rubber, polybutadiene, polyisoprene, styrene-butadiene copolymer (SBR), styrene-butadiene-styrene block copolymer (SBS), styrene-isoprene-styrene copolymer (SIS), ethylene-propylene-diene terpolymer (EPDM), ethylene-vinyl acetate copolymer (EVA) and hydrogenated products of these, etc. may be mentioned. By using an elastomer to be dissolved in the reaction solution, the viscosity of the reaction solution can be controlled. Also, by adding an elastomer, the impact resistance of the obtained norbornene-based resin molded article and complex molded article can be improved. The amount of the elastomer is usually 0.5 to 20 parts by weight and preferably 2 to 10 parts by weight with respect to 100 parts by weight of the norbornene-based monomer in the reaction solution.

As an antioxidizing agent, various types of those for plastics or rubbers such as phenols, phosphorus containing compounds and amines may be mentioned.

Preparation of Reaction Liquids

Reaction liquids are prepared by dividing each of the above components to be included separately in two or more liquids.

As a combination of the two or more reaction liquids, the following two types, (a) and (b), may be mentioned according to the kind of used metathesis catalyst.

(a): As the above metathesis catalyst, those having polymerization activity when combining with an activator, but not when using alone, can be used. In this case, a reaction liquid (A liquid) including a norbornene-based monomer and an activator and another reaction liquid (B liquid) including a norbornene-based monomer and a metathesis catalyst can be used, and mixed to obtain the above reaction solution. Further, a reaction liquid (C liquid) including a norbornene-based monomer and none of a metathesis catalyst and an activator can be used together.

(b): Also, when using a metathesis catalyst having polymerization activity by itself, by mixing a reaction liquid (i) including a norbornene-based monomer and a reaction liquid (ii) including a metathesis catalyst, the above reaction solution can be obtained. As the reaction liquid (ii) in this case, a metathesis catalyst is usually used by dissolving or dispersing in a small amount of inactive solvent.

In any case, a fibrous filler, a particulate filler and the optional components can be included in any reaction liquid. Among these, it is preferable that the fibrous filler and the particulate filler are contained in the reaction liquid including a norbornene-based monomer. Specifically, in the case of (a), (a1) an aspect that the fibrous filler is included in any one of reaction liquids selected from A liquid, B liquid and C liquid, and the particulate filler is included in the different reaction liquid; (a2) an aspect that both the fibrous filler and the particulate filler are included together in any one of reaction liquids selected from A liquid, B liquid and C liquid; (a3) an aspect that two types of C liquid, one including the fibrous filler without the particulate filler and the other including the particulate filler without the fibrous filler, are used together; may be mentioned.

Also, in the case of (b), (b1) an aspect that both the fibrous filler and the particulate filler are included together in one reaction liquid (i) ; (b2) an aspect that two types of the reaction liquid (i), one including the fibrous filler without the particulate filler and the other including the particulate filler without the fibrous filler, are used together; may be mentioned.

Among these, the reaction liquid ($\alpha$) of the present invention is preferable to use.

The reaction liquid ($\alpha$) of the present invention includes a norbornene-based monomer, the fibrous filler and particulate filler and is used in the method of production of the present invention. Namely, it is preferable that the fibrous filler and the particulate filler are included in the same reaction liquid. Specifically, the above aspects (a2) and (b1) are preferable.

The reaction liquid ($\alpha$) of the present invention has characteristics of the suppressed precipitation of the fillers and the superior storing stability by including the fibrous filler and the particulate filler in the same reaction liquid. The amount of the fillers in the reaction liquid ($\alpha$) is the total amounts of the fibrous filler and the particulate filler, and preferably 20 to 80wt%, more preferably 30 to 75wt% and particularly preferably 40 to 70wt%. When the amount of the fillers is excessively large, the fillers may precipitate in a tank and a pipe during storage. When the amount of the fillers is excessively small, the fillers is liable to precipitate since the viscosity of the reaction liquid is not increased, and also, the effects of the improvement in rigidity and dimensional stability may become insufficient since the amount of the fillers included in the resulting molded article is small.

The weight ratio of the fibrous filler and the particulate filler in the reaction liquid ($\alpha$), "fibrous filler: particulate filler", is preferably 95:5 to 55:45, and more preferably 80:20 to 60:40. When the weight ratio of the fibrous filler and the particulate filler is within the above range, the effects of the present invention are easy to obtain, and also, the precipitation of the fillers are particularly low, so that storing stability is satisfactory.

Reaction Injection Molding

Next, the reaction injection molding is performed using the above described reaction liquids.
In the method of production of the present invention, a collisional mixer, used as a reaction injection molding (RIM) machine in the related arts, can be used to mix the reaction liquids. And, two or more reaction liquids are instantly mixed by a mixing head of the RIM machine, the obtained reaction solution is injected in a mold, and bulk polymerized in the mold to obtain a norbornene-based resin molded article of the present invention. Also, a dynamic mixer, a static mixer and other low-pressure injection machines can be used instead of the collisional mixer.

The mold used for reaction injection molding is not necessarily an expensive metal mold with high rigidity, and a resin mold or simple mold form can be used as well as a metal mold. This is because the reaction injection molding can be performed using reaction liquids with low viscosity at relatively low temperatures and pressures. Also, it is preferable to substitute the inside of the mold with inactive gas such as nitrogen gas before injecting the reaction solution.

The mold temperature is preferably 10 to 150°C, more preferably 30 to 120°C, and furthermore preferably 50 to 100°C. The clamping pressure is usually in the range of 0.01 to 10 MPa. Time for bulk polymerization may be selected accordingly, but usually 20 seconds to 20 minutes, preferably 20 seconds to 5 minutes, after finishing injection of reaction liquids.

In the method of production of the present invention, when placing a complex member in the mold, the norbornene-based resin molded article of the present invention can be obtained so as to be a complex molded article co-formed with the complex member. To be "co-formed" indicates that the norbornene-based resin molded article is bonded firmly to the complex member not to be easily broken up. It may be bonded firmly with adhesion of resin or via an adhesive layer.

The complex member used in the present invention is a substance that can be placed in the mold and have no fluidity at the mold temperature when bulk polymerizing. As a material of the complex member, metal, glass, ceramics, woods and other inorganic materials; and resin, rubber and other organic materials; may be mentioned. As an inorganic material, a metal or glass is preferable. As an organic material, a resin is preferable. As a resin, polyolefin resin, acrylic resin, ABS resin, vinyl chloride resin, unsaturated polyester resin, melamine resin, epoxy resin, phenol resin, polyurethane resin, polyamide resin, norbornene-based resin, etc. may be mentioned. Acrylic resin is particularly preferable among these.
The shape of the complex member is not limited, and may be any one of sheet, plate, rod, woven or nonwoven, and various types of three-dimensional shapes, etc.

When bonding the norbornene-based resin firmly to the complex member via an adhesive layer, the adhesive layer may be formed on at least a part of the surface of the complex member that is exposed to the reaction solution. The material used to form the adhesive layer is not particularly limited as far as it does not disturb the bulk polymerization, and varies according to the used complex member, but it is preferable to include a block copolymer of styrene and conjugated diene, or its hydride. As a specific example of such a block copolymer, styrene-butadiene block copolymer (SB), styrene-isoprene block copolymer (SI), styrene-butadiene-styrene block copolymer (SBS), styrene-isoprene-styrene block copolymer (SIS), styrene-butadiene-isoprene-styrene block copolymer (SBIS), etc. may be mentioned. Since adhesiveness between the two is high, it is preferable to bond the norbornene-based resin firmly to the complex member via the adhesive layer.

Norbornene-based Resin Molded Article

As described above, the molded article of the present invention is obtained. The amount of the fillers included in the molded article of the present invention is total amounts of the above fibrous filler and particulate filler, and is preferably 5 to 60wt% and more preferably 10 to 50wt%. Note that when the molded article of the present invention is a complex molded article, the above amount indicates the amount of the fillers in the norbornene-based resin part excluding the complex member. When the amount of the fillers is excessively large, the impact resistance of the molded article may be reduced. On the other hand, when the amount of the fillers is excessively small, rigidity and dimensional stability of the molded article may be insufficient.

Also, the weight ratio of the fillers in the molded article of the present invention, "fibrous filler: particulate filler", is preferably within 95:5 to 55:45, and more preferably 80:20 to 60:40. Note that the above indicate the weight ratio of the fillers in norbornene-based resin part excluding the complex member when a molded article of the present invention is a complex molded article. When the weight ratio of the fibrous filler and the particulate filler is within the above range, the effect of the present invention becomes more significant.

EXAMPLES

Hereinafter, the present invention will be explained in detail based on examples, but the present invention is not limited to the examples. Note that part and % in the following examples and comparative examples indicate weight-based units unless otherwise noted. Also, each characteristic was measured in the following ways.

(1) 50%-volume Cumulative Diameter of the Fillers

The 50%-volume cumulative diameter of the fillers was obtained by using SediGraph (Micromeritics Co.) to measure the particle size distribution with the X-ray transmission method.

(2) Aspect Ratios of the Fillers

The aspect ratios of the fillers were obtained to be ratios of numerical average lengths of the long axis, obtained as the arithmetic average of the lengths of long axis calculated by measurements of the length of long axis of randomly selecting 100 fillers in an optical microscope picture, and the above 50%-volume cumulative diameter of the fillers.

(3) Precipitation Rate of the Fillers

The reaction liquid including the fillers (B liquid or C liquid) was placed in a cylindrical glass container and left at rest. After 24 hours, the height of the supernatant portion due to precipitation of the fillers and the height of the fluid level were measured to calculate the precipitation rate of the fillers in the following formula 1. The smaller the precipitation rate is, the superior in storing stability the reaction liquid is.

```
Precipitation Rate (%) = (Height of the supernatant

portion)/(Height of the fluid level) x 100 …Formula 1
```

(4) Bending Elastic Constant (Representative Value of Rigidity in the Molded Articles)

The bending elastic constant of the norbornene-based resin molded article was measured in accordance with JIS K 7171.

(5) Linear Expansion Coefficient (Representative Value of the Dimensional Stability in the Molded Articles)

The linear expansion coefficient of the norbornene-based resin molded article was measured according to JIS K 7197. Note that as a test specimen, the one with the length of 10mm, the width of 5mm, and the thickness of 4mm was used for measurement.

Example 1

Mixed monomers consisting of 90 parts of dicyclopentadiene and 10 parts of tricyclopentadiene were dissolved with 3 parts by weight of styrene-isoprene-styrene block copolymer (Quintac 3421: Zeon Corporation). Next, diethylaluminun chloride as an activator and 1,3-dichloro-2-propanol as an activity regulator were added so as to contain 100mmol/kg in concentration respectively, and then, 0.1 part of silicon tetrachloride was added, mixed and dispersed uniformly to obtain a reaction liquid (A liquid). The specific gravity of A liquid was 0.98.

Aside from the above, mixed monomers consisting of 90 parts of dicyclopentadiene and 10 parts of tricyclopentadiene were dissolved with 3 parts by weight of styrene-isoprene-styrene block copolymer (Quintac 3421). Then, 2 parts of phenolic antioxidant (IRGANOX 1010: Ciba Specialty Chemicals) were dissolved. Further, tri(tridecyl)ammonium molybdate as a polymerizing catalyst was added so as to contain 25mmol/kg in concentration, mixed and dispersed uniformly to obtain a mixture.

To 100 parts of the resulting mixture, 78.75 parts of wollastonite having a 50%-volume cumulative diameter of $20\mu m$ and an aspect ratio of 18 (SH-400: Kinsei Matec Co., Ltd.; the one surface-treated with vinylsilane) as a fibrous filler and 26.25 parts of heavy calcium carbonate having a 50%-volume cumulative diameter of $1.4\mu m$ and an aspect ratio of 1 (SCP-E#2300: Sankyo Seifun Co., Ltd.; the one surface-treated with stearic acid) as a particulate filler were added, and mixed with stirring to obtain a reaction liquid (B liquid). The weight ratio of the fibrous filler and the particulate filler satisfied 75:25 in the B liquid. The specific gravity of thus obtained B liquid was 1.46. The result of measuring the precipitation rate of the fillers for this B liquid is shown in Table 1.

Two stainless plates were prepared, and faced each other. Silicon packing with a thickness of 4mm and a width of 15mm was placed at both end portions in a longitudinal direction and one end portion in a lateral direction, and the silicon packing was sandwiched with two stainless plates to produce a simple metal mold internally having a space (cavity) with a length of 245mm, a width of 210mm, and a thickness of 4mm. Then, the simple metal mold was vertically placed with the side uncovered with silicon packing up, and was drilled at the lowest part of one stainless plate to form an injection hole for reaction solution. Also, heater wires were applied on all over the other stainless plate to be able to warm.

The above metal mold was warmed to 80°C, and in the mold, 40.2 parts of A liquid and 59.8 parts of B liquid were injected while mixing with a static mixer to initiate bulk polymerization. The mixing ratio of A liquid and B liquid was, in volume ratio, 1:1, and the injected amounts of the fibrous filler and the particulate filler were 22.5 parts and 7.5 parts respectively.

After 2-minute reaction, the metal mold was taken apart to remove a norbornene-based resin molded article. A test specimen with a length of 80mm, a width of 10mm, and a thickness of 4mm was cut out from the norbornene-based resin molded article to measure the bending elastic constant according to the above way. The results are shown in Table 1. $E_{fx}$ here indicates a measured value of the test specimen having length direction to be horizontal to the longitudinal direction of the metal mold. $E_{fy}$ here indicates a measured value of the test specimen having length direction to be horizontal to the lateral direction of the metal mold. The larger $E_{fx}$ and $E_{fy}$ are, the higher the rigidity is. Also, the larger the ratio of $E_{fx}$ and $E_{fy}$ ($E_{fy}/E_{fx}$) is, the less the variation in rigidity in each direction is and the smaller anisotropy is.

Another test specimen with a length of 10mm, a width of 5mm, and a thickness of 4mm was cut out from the norbornene-based resin molded article to measure the linear expansion coefficient according to the above way. The results are shown in Table 1. $\alpha_{spx}$ indicates a measured value of the test specimen having length direction to be horizontal to the longitudinal direction of the metal mold, and $\alpha_{spy}$ indicates a measured value of the test specimen having length direction to be horizontal to the lateral direction of the metal mold.

Table 1

Table 1

|  | Example 1 | Example 2 | Example 3 | Example 4 | Comparative Example 1 | Comparative Example 2 | Comparative Example 3 | Comparative Example 4 |
|---|---|---|---|---|---|---|---|---|
| Fibrous Filler Aspect Ratio Amount in the Molded Article (%) | 18 22.5 | 18 15 | 30 | 18 22.5 | - 0 | 18 30 | 6 30 | - 0 |
| Particulate Filler Amount in the Molded Article (%) | 7.5 | 5 | 10 | 7.5 | 0 | 0 | 0 | 30 |
| Total Amount of the Fillers in the Molded Article (%) | 30 | 20 | 40 | 30 | 0 | 30 | 30 | 30 |
| Precipitation Rate of the Fillers of the Reaction Liquid including the Fillers (%) | 3 | 17 | 0 | 0 | - | 19 | 19 | 19 |
| Characteristics of Resin Molded Article Bending Elastic Constant $E_{fx}$ (GPa) $E_{fy}$ (GPa) $E_{fy}/E_{fx}$ | 4.5 3.5 0.78 | 3.6 3.0 0.83 | 5.4 4.1 0.76 | 4.5 3.5 0.78 | 1.9 1.9 1.00 | 5.2 2.7 0.52 | 3.4 2.5 0.74 | 2.5 2.5 1.00 |

(continued)

| | | | | | | | | |
|---|---|---|---|---|---|---|---|---|
| Linear Expansion Coefficient | | | | | | | | |
| $\alpha_{spx}$ ($\times 10^{-5}$/°C) | 3.0 | 4.1 | 2.2 | 3.0 | 7.5 | 2.3 | 3.9 | 6.0 |
| $\alpha_{spy}$ ($\times 10^{-5}$/°C) | 5.2 | 5.9 | 4.6 | 5.2 | 7.5 | 6.0 | 6.3 | 6.0 |
| $\alpha_{spx}/\alpha_{spy}$ | 0.58 | 0.69 | 0.48 | 0.58 | 1.00 | 0.38 | 0.62 | 1.00 |

Example 2

Except for changing the amounts of the fibrous filler and the particulate filler to 42.75 parts and 14.25 parts respectively, a reaction liquid (B liquid) was prepared in the same way as in example 1. The weight ratio of the fibrous filler and the particulate filler satisfied 75:25. The specific gravity of thus obtained B liquid was 1.28. The result of measuring the precipitation rate of the fillers for the B liquid is shown in Table 1.

Next, except for using this B liquid and the above A liquid with the amount of A liquid to be 43.4 parts and the amount of B liquid to be 56.6 parts, a norbornene-based resin molded article was obtained in the same way as in example 1. The mixing ratio of A liquid and B liquid injected in the metal mold was, in volume ratio, 1:1, and the injected amounts of the fibrous filler and the particulate filler was 15 parts and 5 parts respectively. For the resulting norbornene-based resin molded article, the bending elastic constant and the linear expansion coefficient were measured in the same ways as in example 1. The results are shown in Table 1.

Example 3

Except for changing the amounts of the fibrous filler and the particulate filler to 138 parts and 46 parts respectively, a reaction liquid (B liquid) was prepared in the same way as in example 1. The weight ratio of the fibrous filler and the particulate filler satisfied 75:25. The specific gravity of thus obtained B liquid was 1.67. The result of measuring the precipitation rate of the fillers for the B liquid is shown in Table 1.

Next, except for using this B liquid and the above A liquid with the amount of A liquid to be 37.0 parts and the amount of B liquid to be 63.0 parts, a norbornene-based resin molded article was obtained in the same way as in example 1. The mixing ratio of A liquid and B liquid injected in the metal mold was, in volume ratio, 1:1, and the injected amounts of the fibrous filler and the particulate filler was 30 parts and 10 parts respectively. For the resulting norbornene-based resin molded article, the bending elastic constant and the linear expansion coefficient were measured in the same ways as in example 1. The results are shown in Table 1.

Comparative Example 1

Except for not adding any fibrous filler and particulate filler, a reaction liquid (B liquid) was prepared in the same way as in example 1. The specific gravity of thus obtained B liquid was 0.98.

Next, except for using this B liquid and the above A liquid with the amount of A liquid to be 50.0 parts and the amount of B liquid to be 50.0 parts, a norbornene-based resin molded article was obtained in the same way as in example 1. The mixing ratio of A liquid and B liquid injected in the metal mold was, in volume ratio, 1:1. For the resulting norbornene-based resin molded article, the bending elastic constant and the linear expansion coefficient were measured in the same ways as in example 1. The results are shown in Table 1.

Example 4

To mixed monomers consisting of 90 parts of dicyclopentadiene and 10 parts of tricyclopentadiene, 135 parts of the fibrous filler and 45 parts of the particulate filler were added, and mixed with stirring to obtain a reaction liquid (C liquid). Note that the same fibrous filler and particulate filler were used as in example 1. Also, the weight ratio of the fibrous filler and the particulate filler satisfied 75:25. The specific gravity of thus obtained C liquid was 1.71. The result of measuring the precipitation rate of the fillers for the C liquid is shown in Table 1.

Next, the above metal mold was warmed to 80°C, and in the mold, 44.2 parts of the above C liquid and 27.9 parts each of same A and B liquids as in comparative example 1 were injected while mixing with a static mixer to initiate bulk polymerization. The mixing ratio of A, B and C liquids injected in the metal mold was, in volume ratio, 1:1:1, and the injected amounts of the fibrous filler and the particulate filler were 22.5 parts and 7.5 parts respectively. After 2-minute reaction, the metal mold was taken apart to obtain a norbornene-based resin molded article. For the resulting norbornene-based resin molded article, the bending elastic constant and the linear expansion coefficient were measured in the same ways as in example 1. The results are shown in Table 1.

Comparative Example 2

Except for using 56.5 parts of the fibrous filler and no particulate filler, a reaction liquid (B liquid) was prepared in the same way as in example 1. The specific gravity of thus obtained B liquid was 1.46. The result of measuring the precipitation rate of the fillers for the B liquid is shown in Table 1.

Next, except for using this B liquid and the above A liquid with the amount of A liquid to be 40.2 parts and the amount of B liquid to be 59.8 parts, a norbornene-based resin molded article was obtained in the same way as in example 1. The mixing ratio of A liquid and B liquid injected in the metal mold was, in volume ratio, 1:1, and the injected amount of the fibrous filler was 30 parts. For the resulting norbornene-based resin molded article, the bending elastic constant and the linear expansion coefficient were measured in the same ways as in example 1. The results are shown in Table 1.

Comparative Example 3

Except for using 56.5 parts of wollastonite with an aspect ratio of 6 (FPW350: Kinsei Matec Co., Ltd.; the one surface-treated with silane coupling agent) as a fibrous filler, a reaction liquid (B liquid) was prepared in the same way as in comparative example 2. The specific gravity of thus obtained B liquid was 1.46. The result of measuring the precipitation rate of the fillers for the B liquid is shown in Table 1.

Next, except for using this B liquid and the above A liquid with the amount of A liquid to be 40.2 parts and the amount of B liquid to be 59.8 parts, a norbornene-based resin molded article was obtained in the same way as in example 1. The mixing ratio of A liquid and B liquid injected in the metal mold was, in volume ratio, 1:1, and the injected amount of the fibrous filler was 30 parts. For the resulting norbornene-based resin molded article, the bending elastic constant and the linear expansion coefficient were measured in the same ways as in example 1. The results are shown in Table 1.

Comparative Example 4

Except for using 56.5 parts of the particulate filler and no fibrous filler, a reaction liquid (B liquid) was prepared in the same way as in example 1. The specific gravity of thus obtained B liquid was 1.46. The result of measuring the precipitation rate of the fillers for the B liquid is shown in Table 1.

Next, except for using this B liquid and the above A liquid with the amount of A liquid to be 40.2 parts and the amount of B liquid to be 59.8 parts, a norbornene-based resin molded article was obtained in the same way as in example 1. The mixing ratio of A liquid and B liquid injected in the metal mold was, in volume ratio, 1:1, and the injected amount of the particulate filler was 30 parts. For the resulting norbornene-based resin molded article, the bending elastic constant and the linear expansion coefficient were measured in the same ways as in example 1. The results are shown in Table 1.

As clearly indicated in the above results, it was found that the reaction liquid ($\alpha$) including a fibrous filler and a particulate filler of the present invention showed less precipitation of the fillers and superior storing stability (examples 1 to 4). In contrast, in a reaction liquid including either of a fibrous filler or a particulate filler, the fillers were more precipitated (comparative examples 2 to 4).

Further, it was found that the norbornene-based resin molded article including a fibrous filler and a particulate filler of the present invention had higher rigidity and better dimensional stability as well as smaller anisotropy in rigidity (examples 1 to 4). In contrast, the molded articles including no filler or only a particulate filler were lower in rigidity and dimensional stability (comparative examples 1 and 4). On the other hand, in the molded articles including only a fibrous filler, the bending elastic constant (rigidity) and the linear expansion coefficient were improved in the longitudinal direction, but a little in the lateral direction, so that anisotropy in rigidity was large, and that dimensional stability was poor (comparative examples 2 and 3).

Example 5

Except for using silicon packing with a thickness of 8mm and a width of 15mm, a simple metal mold was formed so as to internally have a space (cavity) with a length of 245mm, a width of 210mm, and a thickness of 8mm in the same way as in example 1. Then, the simple metal mold was vertically placed with the side uncovered with silicon packing up, and was drilled at the lowest part of one stainless plate to form an injection hole for reaction solution. Also, heater wires were applied on all over the other stainless plate to warm.

Aside from the above, an acrylic resin plate (Paraglas PG SG90 P0004: Kuraray Co., Ltd.) with a length of 245mm, a width of 210mm and a thickness of 4mm was prepared as a complex member. 5% toluene solution of polystyrene-poly (ethylene/propylene) block copolymer (Septon 4055: Kuraray Co., Ltd.) including 30% of styrene was applied on one surface of the acrylic resin plate, followed by drying at 80°C for 15 minutes to form an adhesive layer with a thickness of 15$\mu$m consisting of the above block copolymer.

Thus obtained complex member having the adhesive layer was placed at the cavity of the above metal mold. Specifically, the complex member was placed so that the surface, where no adhesive layer was formed, contacted with the stainless plate, where heater wires were applied. Then, the metal mold was warmed to 80°C, and in the mold, A liquid and B liquid were injected to initiate bulk polymerization. The types and injected amounts of A liquid and B liquid were the same as in example 1.

After 2-minute reaction, the metal mold was taken apart to remove a complex molded article of norbornene-based resin and acrylic resin. The obtained complex molded article was checked with eyes to find no distortion. Also, the mold shrinkage ratio for this complex molded article calculated by the following formula 2 was 0.3%.

Mold Shrinkage Ratio (%) = 100 - [(the length of the complex molded article in a longitudinal direction) / (the length of the metal mold cavity in a longitudinal direction) x 100]... Formula 2

Then, a test specimen with a length of 80mm, a width of 10mm, and a thickness of 8mm was cut out from the complex molded article to measure the bending elastic constant. The results are shown in Table 2. The definitions of $E_{fx}$ and $E_{fy}$ here are the same as in example 1.

Table 2

Table 2

| | Example 5 | Comparative Example 5 | Comparative Example 6 | Comparative Example 7 | Comparative Example 8 |
|---|---|---|---|---|---|
| Fibrous Filler Aspect Ratio Amount in the Molded Article (%) | 18 22.5 | - 0 | 18 30 | 6 30 | - 0 |
| Particulate Filler Amount in the Molded Article (%) | 7.5 | 0 | 0 | 0 | 30 |
| Total Amount of the Fillers in the Molded Article (%) | 30 | 0 | 30 | 30 | 30 |
| Characteristics of Complex Molded Article Mold Shrinkage Ratio | 0.3 | 1.0 | 0.3 | 0.3 | 0.3 |
| Distortion in ComplexMolded Article | No | Observed | No | No | No |
| Bending Elastic Constant $E_{fx}$ (GPa) $E_{fy}$ (GPa) $E_{fy}/E_{fx}$ | 3.6 3.0 0.83 | 1.9 1.9 1.00 | 5.2 2.7 0.52 | 3.4 2.5 0.74 | 2.5 2.5 1.00 |

Comparative Examples 5 to 8

Except for changing the types and the injected amounts of A liquid and B liquid according to comparative examples 1 to 4 respectively, a complex molded article was obtained in the same way as in example 5. For the obtained complex molded article, each characteristic was measured. The results are shown in Table 2.

As clearly indicated in the above results, it was found that the complex molded article comprised of the norbornene-based resin molded article of the present invention showed small mold shrinkage, no distortion, and superior dimensional stability. In addition, the complex molded article had high rigidity and small anisotropy in rigidity (example 5). In contrast, in the complex molded article including no fillers in the norbornene-based resin part, the mold shrinkage was large, distortion was observed, and the rigidity was low (comparative example 5). Also in the complex molded article including only the particulate filler in the norbornene-based resin part, the improvement in rigidity was insufficient (comparative example 8). On the other hand, when including only the fibrous filler in the norbornene-based resin part, the resulting complex molded article showed large anisotropy in rigidity (comparative examples 6 and 7).

**Claims**

1. A norbornene-based resin molded article obtained by bulk polymerization of a norbornene-based monomer in a mold comprising a fibrous filler having an aspect ratio of 5 to 100, and a particulate filler having an aspect ratio of 1 to 2.

2. The norbornene-based resin molded article as set forth in claim 1, wherein said fibrous filler is wollastonite.

3. The norbornene-based resin molded article as set forth in claim 1 or 2, wherein said particulate filler is calcium carbonate.

4. The norbornene-based resin molded article as set forth in any one of claims 1 to 3, wherein the weight ratio of said fibrous filler and particulate filler, "fibrous filler: particulate filler", is 95:5 to 55:45.

5. The norbornene-based resin molded article as set forth in any one of claims 1 to 4, wherein the total amount of said fibrous filler and particulate filler is 5 to 60wt% per 100wt% of the whole norbornene-based resin molded article.

6. The norbornene-based resin molded article as set forth in any one of claims 1 to 5, wherein said norbornene-based resin molded article is a complex molded article co-formed with a complex member.

7. A method of production of the norbornene-based resin molded article as set forth in any one of claims 1 to 6, comprising,
injecting a reaction solution including said norbornene-based monomer, a metathesis catalyst, said fibrous filler, and said particulate filler into a mold, and
conducting bulk polymerization in the mold.

8. The method of production of the norbornene-based resin molded article as set forth in claim 7, wherein
said reaction solution is produced by mixing a reaction liquid, at least including said norbornene-based monomer, said fibrous filler, and said particulate filler, with other reaction liquids.

9. The method of production of the norbornene-based resin molded article as set forth in claim 7 or 8, wherein
a complex member is placed in said mold.

10. A reaction liquid used in the method of production as set forth in any one of claims 7 to 9 comprising
said norbornene-based monomer, said fibrous filler, and said particulate filler.

11. The reaction liquid as set forth in claim 10, wherein
a total amount of said fibrous filler and particulate filler is 20 to 80wt% per 100wt% of the whole reaction liquid.

| | | |
|---|---|---|
| **INTERNATIONAL SEARCH REPORT** | International application No. | |
| | PCT/JP2006/302725 | |

A.  CLASSIFICATION OF SUBJECT MATTER
*C08L65/00*(2006.01), *C08K7/02*(2006.01), *C08K3/26*(2006.01), *B29C39/02*
 (2006.01), *B29K23/00*(2006.01), *B29K105/16*(2006.01)

According to International Patent Classification (IPC) or to both national classification and IPC

B.  FIELDS SEARCHED

Minimum documentation searched (classification system followed by classification symbols)
C08L65/00, C08K3/00-13/08

Documentation searched other than minimum documentation to the extent that such documents are included in the fields searched
 Jitsuyo Shinan Koho      1922-1996   Jitsuyo Shinan Toroku Koho   1996-2006
 Kokai Jitsuyo Shinan Koho   1971-2006   Toroku Jitsuyo Shinan Koho   1994-2006

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| A | JP 2001-254033 A  (Hitachi Chemical Co., Ltd.), 18 September, 2001 (18.09.01), Full text (Family: none) | 1-11 |
| A | JP 11-322903 A  (Hitachi Chemical Co., Ltd.), 26 November, 1999 (26.11.99), Full text (Family: none) | 1-11 |
| A | JP 5-301296 A  (Nippon Zeon Co., Ltd.), 16 November, 1993 (16.11.93), Full text (Family: none) | 1-11 |

☐  Further documents are listed in the continuation of Box C.      ☐   See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| | |
|---|---|
| Date of the actual completion of the international search     10 April, 2006 (10.04.06) | Date of mailing of the international search report     18 April, 2006 (18.04.06) |
| Name and mailing address of the ISA/     Japanese Patent Office | Authorized officer |
| Facsimile No. | Telephone No. |

Form PCT/ISA/210 (second sheet) (April 2005)

**EP 1 849 832 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 58129013 A
- JP 2185558 A
- JP 2003321597 A